(19) **Europäisches Patentamt / European Patent Office / Office européen des brevets**

(11) **EP 4 783 036 A1**

(12) **EUROPEAN PATENT APPLICATION**
published in accordance with Art. 153(4) EPC

(43) Date of publication:
**29.07.2026 Bulletin 2026/31**

(21) Application number: **23956466.9**

(22) Date of filing: **26.10.2023**

(51) International Patent Classification (IPC):
**G06F 18/15** (2023.01)

(52) Cooperative Patent Classification (CPC):
**G06F 18/15**

(86) International application number:
**PCT/CN2023/126912**

(87) International publication number:
**WO 2025/086218 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventors:
• **WANG, Dan**
  **Beijing 100102 (CN)**
• **LI, Jing**
  **Beijing 100102 (CN)**
• **LIU, Hao**
  **Beijing 100102 (CN)**
• **HUA, Wen Tao**
  **Beijing 100102 (CN)**
• **ZHANG, Peng Fei**
  **Beijing 100102 (CN)**
• **ZHAO, Shuang**
  **Beijing 100102 (CN)**

(74) Representative: **Isarpatent**
**Patent- und Rechtsanwälte Part G mbB**
**Friedrichstrasse 31**
**80801 München (DE)**

(54) **INTERPOLATION METHOD AND APPARATUS FOR ELECTRIC POWER DATA**

(57)     The present disclosure provides a power data interpolation method. The interpolation method includes: obtaining one-dimensional time-series power data of a power device, where the power data is periodic; converting the one-dimensional time-series power data into a two-dimensional image based on periodicity; identifying a blank point region in the two-dimensional image, extending the blank point region to an adjacent region, and performing interpolation on the blank point region based on power data in the adjacent region; and converting the interpolated two-dimensional image into one-dimensional time-series power data.

FIG. 1

## Description

## TECHNICAL FIELD

The present disclosure mainly relates to the field of power digitalization, and in particular, to a power data interpolation method and apparatus.

## BACKGROUND

During operation, a power device (such as a distribution transformer or a solar panel) generates power data, and such power data often contains missing values. To perform complete and reliable analysis on the power data, interpolation is required to recover the missing values.

In the related art, interpolation of missing power data is typically performed using a traversal-based approach. To be specific, existing power data is first traversed, and interpolation is then performed based on a traversal result. For large-scale power data, such traversal-based approach is highly time-consuming and computationally intensive, requiring substantial computing resources.

## SUMMARY

To solve the foregoing technical problem, the present disclosure provides a power data interpolation method and apparatus, so as to improve efficiency of power data interpolation.

To achieve the foregoing objective, the present disclosure provides a power data interpolation method. The interpolation method includes:

obtaining one-dimensional time-series power data of a power device, where the power data is periodic;
converting the one-dimensional time-series power data into a two-dimensional image based on periodicity;
identifying a blank point region in the two-dimensional image, extending the blank point region to an adjacent region, and performing interpolation on the blank point region based on power data in the adjacent region; and
converting the interpolated two-dimensional image into one-dimensional time-series power data.

The one-dimensional time-series power data is converted into the two-dimensional image, the blank point region in the two-dimensional image is identified, the blank point region is extended to the adjacent region, and interpolation is performed on the blank point region based on the power data in the adjacent region. Because the power data in the adjacent region is used, traversal of the one-dimensional time-series power data is not required, to significantly reduce an amount of data computation, ensure interpolation accuracy, and improve interpolation efficiency.

Alternatively, the converting the one-dimensional time-series power data into a two-dimensional image based on periodicity includes: creating a coordinate system, where a horizontal axis of the coordinate system represents days, and a vertical axis of the coordinate system represents the power data; and sequentially filling the one-dimensional time-series power data into days corresponding to the one-dimensional time-series data in the two-dimensional coordinate system. The one-dimensional time-series power data is sequentially filled into the days corresponding to the one-dimensional time-series data in the two-dimensional coordinate system. In this way, accuracy of power data filling is ensured based on the periodicity of the power data.

Alternatively, the converting the one-dimensional time-series power data into a two-dimensional image based on periodicity includes: mapping the power data into a grayscale value, matching the grayscale value to a grayscale table to obtain grayscale corresponding to the power data, and assigning the grayscale to a region of the power data. The power data is converted into the grayscale image, thereby improving a conversion speed, and further improving interpolation efficiency.

Alternatively, the converting the one-dimensional time-series power data into a two-dimensional image based on periodicity includes: normalizing the power data, mapping the normalized power data to RGB colors using a jet colormap algorithm, and assigning the RGB colors to a region of the power data. The power data is converted into an RGB image. The RGB image provides rich color information to facilitate identification of blank point region, thereby improving interpolation efficiency.

Alternatively, the extending the blank point region to an adjacent region includes: receiving a horizontal coordinate extension amount and a vertical coordinate extension amount, determining a minimum bounding region including the blank point region, and extending the minimum bounding region according to the horizontal coordinate extension amount and the vertical coordinate extension amount. The horizontal coordinate extension amount and the vertical coordinate extension amount are received, thereby improving extension flexibility.

Alternatively, the performing interpolation on the blank point region based on power data in the adjacent region includes: performing interpolation on the blank point region by using one of the following algorithms: a linear interpolation method, a bilinear interpolation method, and a K-nearest neighbors method. In this way, interpolation of the blank point region is achieved.

The present disclosure further provides a power data interpolation apparatus. The interpolation apparatus includes:

an obtaining module, configured to obtain one-dimensional time-series power data of a power device, where the power data is periodic;

a first conversion module, configured to convert the one-dimensional time-series power data into a two-dimensional image based on periodicity;

an interpolation module, configured to identify a blank point region in the two-dimensional image, extend the blank point region to an adjacent region, and perform interpolation on the blank point region based on power data in the adjacent region; and

a second conversion module, configured to convert the interpolated two-dimensional image into one-dimensional time-series power data.

The present disclosure further provides an electronic device, including a processor, a memory, and instructions stored in the memory, where the instructions, when executed by the processor, implement the method described above.

The present disclosure further provides a computer-readable storage medium, having computer instructions stored therein, where the computer instructions, when run, implement the method described above.

The present disclosure further provides a computer program product, including a computer program, where the computer program, when executed by a processor, implements the method described above.

## BRIEF DESCRIPTION OF THE DRAWINGS

The following drawings are only intended to give exemplary descriptions and explanations of the present disclosure but are not intended to limit a scope of the present disclosure. Among the drawings:

FIG. 1 is a flowchart of a power data interpolation method according to an embodiment of the present disclosure.

FIG. 2 is a schematic diagram of converting one-dimensional time-series power data into a two-dimensional image according to an embodiment of the present disclosure.

FIG. 3 is a schematic diagram of identifying and extending a blank point region in a two-dimensional image according to an embodiment of the present disclosure.

FIG. 4 is a schematic diagram of an interpolated two-dimensional image according to an embodiment of the present disclosure.

FIG. 5 is a schematic diagram of a power data interpolation apparatus according to an embodiment of the present disclosure.

FIG. 6 is a schematic diagram of an electronic device according to an embodiment of the present disclosure.

Reference numerals:

100: power data interpolation method
110-140: steps

31: minimum bounding region
32: adjacent region
500: power data interpolation apparatus
510: obtaining module
520: first conversion module
530: interpolation module
540: second conversion module
600: electronic device
610: processor
620: memory

## DETAILED DESCRIPTION

To more clearly understand the technical features, objectives, and effects of the present disclosure, specific implementations of the present disclosure are described with reference to the drawings.

Many specific details are described in the following description to facilitate a full understanding of the present disclosure, but the present disclosure may alternatively be implemented in other manners different from those described herein. Therefore, the present disclosure is not limited to the specific embodiments disclosed below

As used in this application and the claims, unless the context clearly indicates otherwise, terms "a", "an", "one", and/or "the" do not necessarily refer to the singular and may include the plural as well. In general, terms "comprise" and "include" merely indicate including clearly identified steps and elements. However, the steps and elements do not constitute an exclusive list, and a method or a device may further include other steps or elements.

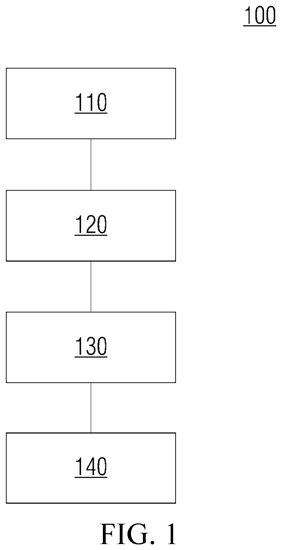

The present disclosure provides a power data interpolation method. FIG. 1 is a flowchart of a power data interpolation method 100 according to an embodiment of the present disclosure. As shown in FIG. 1, the interpolation method 100 includes:

Step 110: Obtain one-dimensional time-series power data of a power device, where the power data is periodic.

The power device may be a distribution transformer or a solar panel. The power device may be provided with a data collection module, configured to obtain the one-dimensional time-series power data of the power device, that is, obtain power data at different sampling moments according to a fixed or dynamic sampling rate, and the data is continuous in time dimension. For example, the load of the distribution transformer is collected every 10 s, and the load at different moments constitutes one-dimensional time-series power data. The power data is periodic. A distribution transformer is used as an example. The load is large in a peak electricity usage period such as in the evening, and the load is small in a trough electricity usage period such as in the middle of the night.

Step 120: Convert the one-dimensional time-series power data into a two-dimensional image based on periodicity.

The one-dimensional time-series power data may be converted into the two-dimensional image based on periodicity of the power data. For example, power data of a same day is filled into a same row or a same column, or power data of a same week is filled into a same row or a same column. Sequential filling is performed in chronological order, and a two-dimensional power data matrix may be generated. The power data is converted into colors according to values of the power data, to generate the two-dimensional image.

In some embodiments, the converting the one-dimensional time-series power data into a two-dimensional image based on periodicity includes: creating a coordinate system, where a horizontal axis of the coordinate system represents days, and a vertical axis of the coordinate system represents the power data; and sequentially filling the one-dimensional time-series power data into days corresponding to the one-dimensional time-series data in the two-dimensional coordinate system. Power data including 250,000 data points is used as an example. 5,000 data points are collected each day, and collection is performed for 500 consecutive days. The 5,000 data points collected each day may be filled into a same column, and data of each day is arranged in sequence, to generate a 500*5000 two-dimensional data matrix.

In some embodiments, the converting the one-dimensional time-series power data into a two-dimensional image based on periodicity includes: mapping the power data into a grayscale value, matching the grayscale value to a grayscale table to obtain grayscale corresponding to the power data, and assigning the grayscale to a region of the power data. The power data is mapped to the grayscale value. The power data may be divided by a maximum value and multiplied by 255, and rounding is performed. After being calculated, the grayscale value is matched to the grayscale table to obtain the corresponding grayscale, and the region of the power data is assigned the grayscale. Power data 4980 is used as an example. If a maximum value is 5000, a grayscale value of the power data is [4980/5000*255]=254. The grayscale value 254 is matched to the grayscale table to obtain grayscale close to black, and the region in which the power data 4980 is located is assigned the grayscale.

In some embodiments, the converting the one-dimensional time-series power data into a two-dimensional image based on periodicity includes: normalizing the power data, mapping the normalized power data to RGB colors using a jet colormap algorithm, and assigning the RGB colors to a region of the power data.

Specifically, for the jet colormap algorithm, a piecewise linear function f(x) may be first defined as follows:

$$f(x) = \begin{cases} 0 & \text{if } x < \frac{1}{8} \\ 8x & \text{if } \frac{1}{8} \le x < \frac{3}{8} \\ 8 - 8x & \text{if } \frac{3}{8} \le x < \frac{5}{8} \\ 0 & \text{if } x \ge \frac{5}{8} \end{cases}$$

where x represents the normalized power data.

The normalized power data is converted into RGB colors by using the piecewise linear function f(x), where the formula is as follows:

$$\begin{bmatrix} r \\ g \\ b \end{bmatrix} = \begin{bmatrix} f(x) \\ f\left(x - \frac{1}{4}\right) \\ f\left(x - \frac{1}{2}\right) \end{bmatrix}$$

An r value is f (x), a g value is $\left(x - \frac{1}{4}\right)$, a b value is $f\left(x - \frac{1}{2}\right)$. Therefore, an RGB value corresponding to the power data can be calculated, the RGB colors can be obtained by matching the RGB value to an RGB color table, and the region of the power data is assigned the RGB colors.

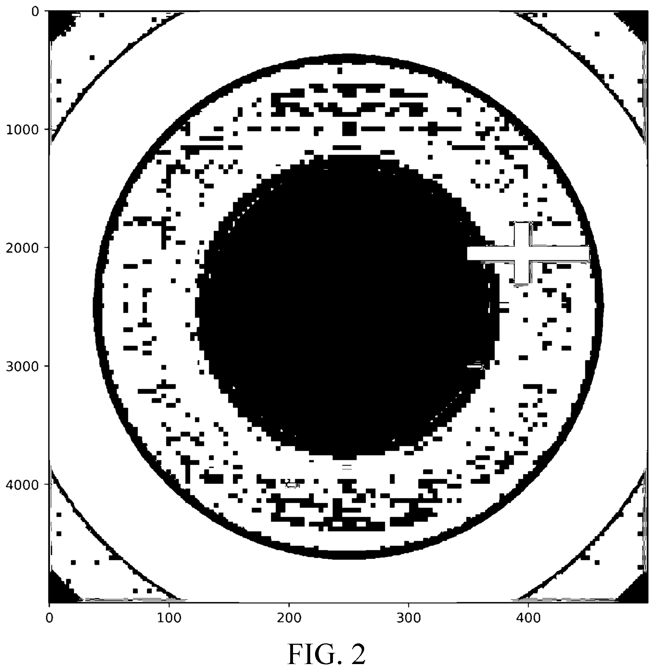

FIG. 2 is a schematic diagram of converting one-dimensional time-series power data into a two-dimensional image according to an embodiment of the present disclosure. As shown in FIG. 2, the one-dimensional time-series power data is converted into a 500*5000 image. In the image, data points are converted into grayscale, and a blank point region indicates missing power data.

Step 130: Identify a blank point region in the two-dimensional image, extend the blank point region to an adjacent region, and perform interpolation on the blank point region based on power data in the adjacent region.

The blank point region, that is, a region with missing power data, in the two-dimensional image is identified through computer vision. The blank point region is extended to the adjacent region, and interpolation is performed on the blank point region based on the power data in the adjacent region. Because the power data is periodic, the power data in the adjacent region has a correlation with the missing data in the blank point region. The missing data in the blank point region can be filled based on the correlation. Because the power data in the adjacent region is used, traversal of the one-dimensional time-series power data is not required, to significantly reduce an amount of data computation, ensure interpolation accuracy, and improve interpolation efficiency. The performing interpolation on the blank point region based on power data in the adjacent region may include: performing interpolation on the blank point region by using one of the following algorithms: a linear interpolation method, a bilinear interpolation method, and a K-nearest neighbors method.

In some embodiments, the extending the blank point region to an adjacent region includes: receiving a horizontal coordinate extension amount and a vertical coordinate extension amount, determining a minimum bounding region including the blank point region, and extending the minimum bounding region according to the horizontal coordinate extension amount and the vertical coordinate extension amount. The horizontal coordinate extension amount and the vertical coordinate extension amount may be input by a user.

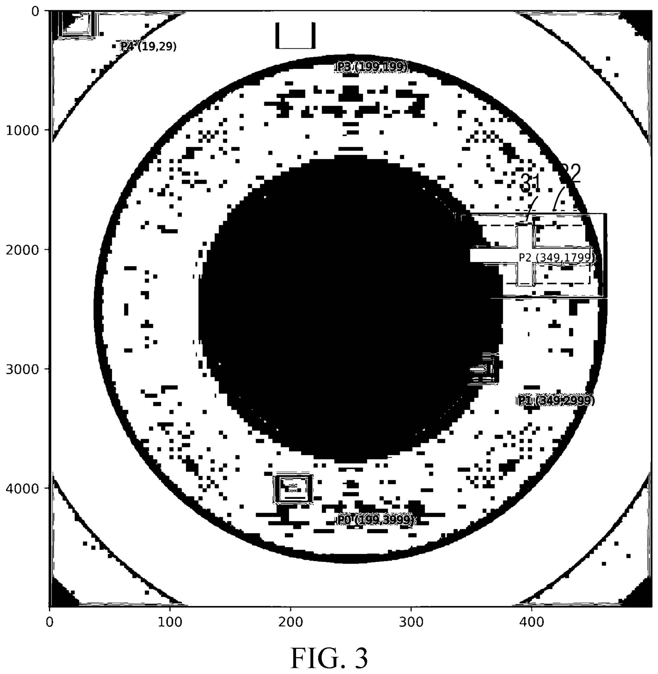

FIG. 3 is a schematic diagram of identifying and extending a blank point region in a two-dimensional image according to an embodiment of the present disclosure. As shown in FIG. 3, five blank point regions are identified, which are P1, P2, P3, P4, and P5, respectively. The blank point region may be defined by coordinates (x, y) of an upper-left vertex and a width (w) and a height (h) of the blank point region, namely, (x, y, w, h). For the blank point region P2 (349, 1799, 102, 502), a determined minimum bounding region of the blank point region P2 is 31 in FIG. 3. Received horizontal coordinate extension amount and vertical coordinate extension amount that are input by the user are 10 and 100, respectively, and an extended adjacent region 32 is (339, 1699, 122, 702).

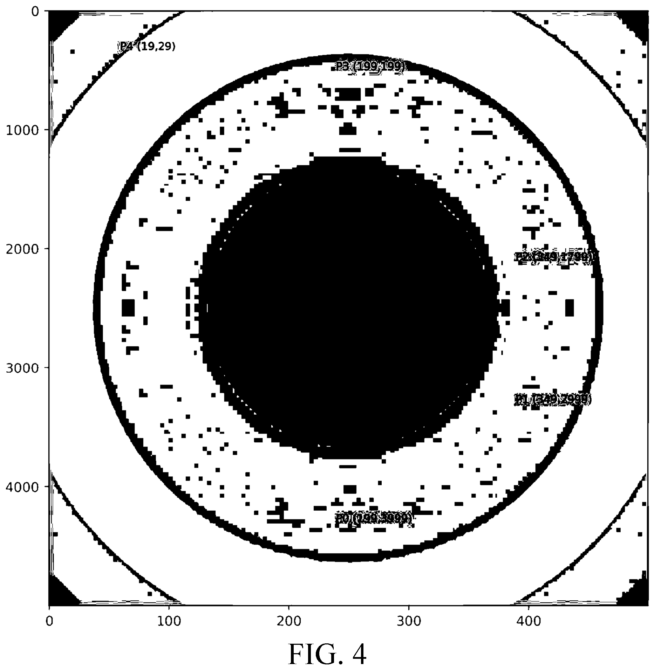

FIG. 4 is a schematic diagram of an interpolated two-dimensional image according to an embodiment of the present disclosure. As shown in FIG. 4, after interpolation, a blank point region is filled.

Step 140: Convert the interpolated two-dimensional image into one-dimensional time-series power data.

The two-dimensional image may be restored to a two-dimensional data matrix, and the two-dimensional data matrix may be restored to one-dimensional time-series power data.

The embodiments of the present disclosure provide the power data interpolation method. The one-dimensional time-series power data is converted into the two-dimensional image, the blank point region in the two-dimensional image is identified, the blank point region is extended to the adjacent region, and interpolation is performed on the blank point region based on the power data in the adjacent region. Because the power data in the adjacent region is used, traversal of the one-dimensional time-series power data is not required, to significantly reduce an amount of data computation, ensure interpolation accuracy, and improve interpolation efficiency.

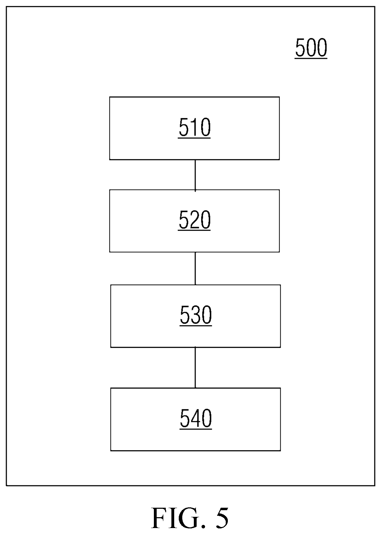

The present disclosure further provides a power data interpolation apparatus. FIG. 5 is a schematic diagram of a power data interpolation apparatus 500 according to an embodiment of the present disclosure. As shown in FIG. 5, the interpolation apparatus 500 includes:

an obtaining module 510, configured to obtain one-dimensional time-series power data of a power device, where the power data is periodic;
a first conversion module 520, configured to convert the one-dimensional time-series power data into a two-dimensional image based on periodicity;
an interpolation module 530, configured to identify a blank point region in the two-dimensional image, extend the blank point region to an adjacent region, and perform interpolation on the blank point region based on power data in the adjacent region; and
a second conversion module 540, configured to convert the interpolated two-dimensional image into one-dimensional time-series power data.

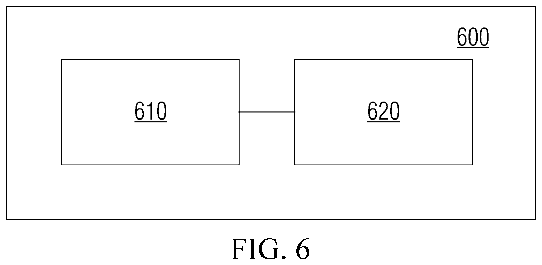

The present disclosure further provides an electronic device 600. FIG. 6 is a schematic diagram of an electronic device 600 according to an embodiment of the present disclosure. As shown in FIG. 6, the electronic device 600 includes a processor 610 and a memory 620, where the memory 620 has instruction stored therein, and the instructions, when executed by the processor 610, implement the method 100 described above.

The present disclosure further provides a computer-readable storage medium, having computer instructions stored therein, where the computer instructions, when run, implement the method 100 described above.

The present disclosure further provides a computer program product, including a computer program, where the computer program, when executed by a processor, implements the method 100 described above.

Some aspects of the method and apparatus of the present disclosure may be entirely executed by hardware, may be entirely executed by software (including firmware, resident software, microcode, and the like), or may be executed by a combination of hardware and software. The hardware or software may be referred to as a "data block", a "module", an "engine", a "unit", a "component", or a "system". A processor may be one or more application-specific integrated circuits (ASIC), digital signal processors (DSP), digital signal processing devices (DSPD), programmable logic devices (PLD), field-programmable gate arrays (FPGA), processors, controllers, microcontrollers, microprocessors, or a combination thereof. In addition, various aspects of the present disclosure may be embodied as a computer product located in one or more computer-readable media, and the product includes computer-readable program code. For example, the computer-readable medium may include, but is not limited to, a magnetic storage device (such as a hard disk, a floppy disk, or a magnetic tape), an optical disk (such as a compact disk (CD) or a digital versatile disk (DVD)), a smart card, and a flash storage device (such as a card, a stick, or a key driver).

Herein, the operations in the method according to the embodiments of this application are described with reference to the flowchart. It should be understood that the operations may not be performed accurately in order. Instead, various steps may be performed in a reverse order or simultaneously. In addition, other operations are added to these processes, or one or more operations are removed from these processes.

It should be understood that, although various embodiments are described in the description, not each embodiment includes only one independent technical solution, and the narrative style of the description is adopted merely for clarity. A person skilled in the art should consider the description as a whole, and the technical solutions from various embodiments may be appropriately combined to form other implementations that can be understood by a person skilled in the art.

The above are merely specific exemplary specific implementations of the present disclosure, and are not intended to limit the scope of the present disclosure. Any equivalent change, modification, and combination made by a person skilled in the art without departing from the conception and principles of the present disclosure should all fall within the scope of protection of the present disclosure.

The nouns and pronouns related to persons in this patent application are not limited to a specific gender.

## Claims

1. A power data interpolation method (100), comprising:

   obtaining one-dimensional time-series power data of a power device, wherein the power data is periodic (110);
   converting the one-dimensional time-series power data into a two-dimensional image based on periodicity (120);
   identifying a blank point region in the two-dimensional image, extending the blank point region to an adjacent region, and performing interpolation on the blank point region based on power data in the adjacent region (130); and
   converting the interpolated two-dimensional image into one-dimensional time-series power data (140).

2. The interpolation method (100) according to claim 1, wherein the converting the one-dimensional time-series power data into a two-dimensional image based on periodicity comprises: creating a coordinate system, wherein a horizontal axis of the coordinate system represents days, and a vertical axis of the coordinate system represents the power data; and sequentially filling the one-dimensional time-series power data into days corresponding to the one-dimensional time-series data in the two-dimensional coordinate system.

3. The interpolation method (100) according to claim 2, wherein the converting the one-dimensional time-series power data into a two-dimensional image based on periodicity comprises: mapping the power data into a grayscale value, matching the grayscale value to a grayscale table to obtain grayscale corresponding to the power data, and assigning the grayscale to a region of the power data.

4. The interpolation method (100) according to claim 2, wherein the converting the one-dimensional time-series power data into a two-dimensional image based on periodicity comprises: normalizing the power data, mapping the normalized power data to RGB colors using a jet colormap algorithm, and assigning the RGB colors to a region of the power data.

5. The interpolation method (100) according to claim 1, wherein the extending the blank point region to an adjacent region comprises: receiving a horizontal coordinate extension amount and a vertical coordinate extension amount, determining a minimum bounding region comprising the blank point region, and extending the minimum bounding region according to the horizontal coordinate extension amount and the vertical coordinate extension amount.

6. The interpolation method (100) according to claim 1, wherein the performing interpolation on the blank point region based on power data in the adjacent region comprises: performing interpolation on the blank point region by using one of the following algorithms: a linear interpolation method, a bilinear interpolation method, and a K-nearest neighbors method.

7. A power data interpolation apparatus (500), comprising:

   an obtaining module (510), configured to obtain one-dimensional time-series power data of a power device, wherein the power data is periodic;
   a first conversion module (520), configured to convert the one-dimensional time-series power data into a two-dimensional image based on periodicity;
   an interpolation module (530), configured to identify a blank point region in the two-dimensional image, extend the blank point region to an adjacent region, and perform interpolation on the blank point region based on power data in the adjacent region; and

a second conversion module (540), configured to convert the interpolated two-dimensional image into one-dimensional time-series power data.

8. An electronic device (600), comprising a processor (610), a memory (620), and instructions stored in the memory (620), wherein the instructions, when executed by the processor (610), implement the method (100) according to any one of claims 1 to 6.

9. A computer-readable storage medium, storing computer instructions, wherein the computer instructions, when run, implement the method (100) according to any one of claims 1 to 6.

10. A computer program product, comprising a computer program, wherein the computer program, when executed by a processor, implements the method (100) according to any one of claims 1 to 6.

100

FIG. 1

FIG. 2

FIG. 3

FIG. 4

FIG. 5

FIG. 6

## INTERNATIONAL SEARCH REPORT

| International application No. |
|---|
| **PCT/CN2023/126912** |

### A. CLASSIFICATION OF SUBJECT MATTER

G06F 18/15(2023.01)i

According to International Patent Classification (IPC) or to both national classification and IPC

### B. FIELDS SEARCHED

Minimum documentation searched (classification system followed by classification symbols)

IPC: G06K 9/-, G06T, G06Q

Documentation searched other than minimum documentation to the extent that such documents are included in the fields searched

Electronic data base consulted during the international search (name of data base and, where practicable, search terms used)

CNTXT: CNKI; ENTXTC; ENTXT; DWPI; VEN; IEEE: 图像, 插值, 电力数据, 空白, 二维, 一维, 区域, 转换, 周期, 时序; image, interpolation, power data, blank, two-dimensional, one-dimensional, region, conversion, period, timing

### C. DOCUMENTS CONSIDERED TO BE RELEVANT

| Category* | Citation of document, with indication, where appropriate, of the relevant passages | Relevant to claim No. |
|---|---|---|
| Y | WO 2020232641 A1 (SIEMENS AG et al.) 26 November 2020 (2020-11-26) description, page 1, line 20 to page 3, line 1 | 1-10 |
| Y | CN 109635821 A (BEIJING BYTEDANCE NETWORK TECHNOLOGY CO., LTD.) 16 April 2019 (2019-04-16) description, paragraphs 5-21 | 1-10 |
| A | CN 112508790 A (SHANGHAI UNITED IMAGING HEALTHCARE CO., LTD.) 16 March 2021 (2021-03-16) entire document | 1-10 |
| A | CN 113795865 A (SIEMENS AG) 14 December 2021 (2021-12-14) entire document | 1-10 |
| A | CN 113853624 A (SIEMENS AG) 28 December 2021 (2021-12-28) entire document | 1-10 |
| A | WO 2020252784 A1 (SIEMENS AG et al.) 24 December 2020 (2020-12-24) entire document | 1-10 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 April 2024** | **16 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/126912** |

| C. | DOCUMENTS CONSIDERED TO BE RELEVANT | |
|---|---|---|
| Category* | Citation of document, with indication, where appropriate, of the relevant passages | Relevant to claim No. |
| A | WO 2021101002 A1 (INHA INDUSTRY PARTNERSHIP INSTITUTE) 27 May 2021 (2021-05-27)<br>entire document | 1-10 |

Form PCT/ISA/210 (second sheet) (July 2022)

**INTERNATIONAL SEARCH REPORT**
Information on patent family members

International application No.

**PCT/CN2023/126912**

| Patent document cited in search report | | | Publication date (day/month/year) | Patent family member(s) | | | Publication date (day/month/year) |
|---|---|---|---|---|---|---|---|
| WO | 2020232641 | A1 | 26 November 2020 | None | | | |
| CN | 109635821 | A | 16 April 2019 | None | | | |
| CN | 112508790 | A | 16 March 2021 | None | | | |
| CN | 113795865 | A | 14 December 2021 | None | | | |
| CN | 113853624 | A | 28 December 2021 | None | | | |
| WO | 2020252784 | A1 | 24 December 2020 | US | 2023096258 | A1 | 30 March 2023 |
| | | | | US | 11831160 | B2 | 28 November 2023 |
| | | | | EP | 3968247 | A1 | 16 March 2022 |
| | | | | EP | 3968247 | A4 | 21 December 2022 |
| WO | 2021101002 | A1 | 27 May 2021 | KR | 20210061705 | A | 28 May 2021 |
| | | | | KR | 102638967 | B1 | 22 February 2024 |

Form PCT/ISA/210 (patent family annex) (July 2022)